# EUROPEAN PATENT APPLICATION

(11) **EP 4 470 968 A1**
(43) Date of publication of application: **04.12.2024**
(21) Application number: 23201426.6
(22) Date of filing: 03.10.2023
(51) Int. Cl.: C01B 3/02, C01B 3/38, C01B 3/48, C01B 3/50

(54) **IMPROVED HYDROGEN PRODUCTION PROCESS**

(30) Priority: 31.05.2023 US 202363469841 P
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Detweiler, Dayne, Houston, 77024 (US); Dasgupta, Sayan, 60439 Frankfurt (DE); Singh, Aditya, 60439 Frankfurt (DE); Frigola, Louis, 60439 Frankfurt (DE); Rösch, Alexander, 60439 Frankfurt (DE)
(74) Representative: Air Liquide

(57) **Abstract**

Process and method to generate hydrogen with high CO₂ capture rate. The invention entails production of hydrogen in an efficient and innovative way without any continuous carbon emissions within the hydrogen production unit by use of only one CO₂ removal unit. The proposed novel solution allows achieving a direct CO₂ capture rate of >99% by the autothermal reforming based hydrogen generation process with one CO₂ removal unit with an efficient thermal integration and without any fired heater.

## Description

### Cross Reference to Related Applications

This application claims the benefit of priority under 35 U.S.C. § 119 (a) and (b) to US Provisional Patent Application No. 63/469,841 filed May 31, 2023, the entire contents of which are incorporated herein by reference.

### Background

Hydrogen production is currently associated with substantial CO₂ emissions. It is imperative to reduce the carbon footprint of H₂ production to minimize the impact of H₂ production on the environment.

The state of the art teaches two main solutions to capture CO₂ in a hydrogen production unit:
- pre-combustion, i.e. capturing the CO₂ before any combustion reaction takes place (e.g. in the burners of fired heater)
- post-combustion, i.e. capturing the CO₂ after a combustion reaction (e.g. in the burners of fired heater) took place and before releasing the CO₂ containing gas to the atmosphere

Pre-combustion CO₂ capture can achieve an overall CO₂ capture of ~ 50 - 60% with conventional steam methane reforming (SMR) based H₂ generation process. In Autothermal reforming based H₂ generation process, intrinsic CO₂ capture of 85-90% is achieved from produced syngas. The CO₂ capture rate can be increased by firing a small split stream of product H₂ in the fired heater as fuel. This method reduces the hydrocarbon fuel consumption and thereby reduces the carbon emission through the fired heater.

However, to generate this additional H₂ to be used as fuel, more hydrocarbon feed needs to be reformed and the carbon footprint of the process is increased by that resulting in higher scope 3 emissions. Also, to reform more hydrocarbon feedstock, more oxygen intake is also required, which means higher power consumption and higher capital cost for the Air Separation Unit. Hence, enhancing the CO₂ capture is realized by increasing the Scope 2 (electricity import) and Scope 3 (hydrocarbon feedstock) emissions which is counter-productive in terms of overall emissions. Or in other words, direct emissions are minimized by increasing indirect emissions.

In one embodiment of the current invention, the proposed novel solution allows achieving a direct CO₂ capture rate of >99% by the autothermal reforming based hydrogen generation process with one CO₂ removal unit with an efficient thermal integration and without any fired heater.

### Summary

Process and method to generate hydrogen with high CO₂ capture rate. The invention entails production of hydrogen in an efficient and innovative way without any continuous carbon emissions within the hydrogen production unit by use of only one CO₂ removal unit. The proposed novel solution allows achieving a direct CO₂ capture rate of >99% by the autothermal reforming based hydrogen generation process with one CO₂ removal unit with an efficient thermal integration and without any fired heater.

### Brief Description of the Figures

For a further understanding of the nature and objects for the present invention, reference should be made to the following detailed description, taken in conjunction with the accompanying drawings, in which like elements are given the same or analogous reference numbers and wherein:
Figure 1 is a schematic representation of a basic state-of-the-art hydrogen plant utilizing autothermal reformer, in accordance with one embodiment of the present invention.
Figure 2 is a schematic representation of one embodiment of a hydrogen plant, in accordance with the present invention.
Figure 3 is a schematic representation of another embodiment of a hydrogen plant, in accordance with the present invention.
Figure 4 is a schematic representation of another embodiment of a hydrogen plant, in accordance with the present invention.
Figure 5 is a schematic representation of another embodiment of a hydrogen plant, in accordance with the present invention.

### Element Numbers

100 = hydrogen plant as known in the art
101 = hydrocarbon feedstock stream
102 = fired heater
103 = heat exchange coils
104 = preheated feedstock stream
105 = steam stream
106 = pre-reformer feed stream
107 = pre-reformer
108 = pre-reformed stream
109 = preheated pre-reformed stream
110 = ATR feed stream
111 = ASU
112 = oxygen containing stream
113 = ATR
114 = raw syngas stream
115 = water-gas shift reactor
116 = shifted syngas stream
117 = hydrogen separation device
118 = product hydrogen stream
119 = purge gas stream
120 = purge gas fuel stream
121 = purge recycle stream
122 = flue gas stream
123 = hydrocarbon fuel stream
200 = hydrogen plant according to the present invention
201 = hydrocarbon feedstock stream
202 = feedstock preheater
203 = heat transfer line for feedstock preheater
204 = heat transfer line for feedstock preheater
205 = heated feedstock stream
206 = steam stream
207 = ATR feed stream
208 = ATR feed preheater
209 = heat transfer line for ATR feed preheater
210 = heat transfer line for ATR feed preheater
211 = heated ATR feed stream
212 = combined ATR feed stream
213 = ASU
214 = oxygen containing stream
215 = ATR
216 = raw syngas stream
217 = waste heat boiler
218 = boiler feedwater stream
219 = saturated steam stream
220 = cooled raw syngas stream
221 = first heat exchanger
222 = heat transfer line for first heat exchanger
223 = heat transfer line for first heat exchanger
224 = further cooled raw syngas stream
225 = water-gas shift reactor
226 = shifted syngas stream
227 = first shifted syngas stream
228 = second shifted syngas stream
229 = second heat exchanger
230 = heat transfer line for second heat exchanger
231 = heat transfer line for second heat exchanger
232 = third heat exchanger
233 = heat transfer line for third heat exchanger
234 = heat transfer line for third heat exchanger
235 = first cooled shifted syngas stream
236 = second cooled shifted syngas stream
237 = cooled shifted syngas stream
238 = hydrogen separation device
239 = product hydrogen stream
240 = purge gas recycle stream

### Description of Preferred Embodiments

Illustrative embodiments of the invention are described below. While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

It will of course be appreciated that in the development of any such actual embodiment, numerous implementation-specific decisions must be made to achieve the developer's specific goals, such as compliance with system-related and businessrelated constraints, which will vary from one implementation to another. Moreover, it will be appreciated that such a development effort might be complex and timeconsuming, but would nevertheless be a routine undertaking for those of ordinary skill in the art having the benefit of this disclosure.

In one embodiment of the present invention a method of producing low carbon hydrogen is described, wherein the direct carbon emissions are minimized without increasing any indirect emissions, thus reducing the carbon intensity of the process.

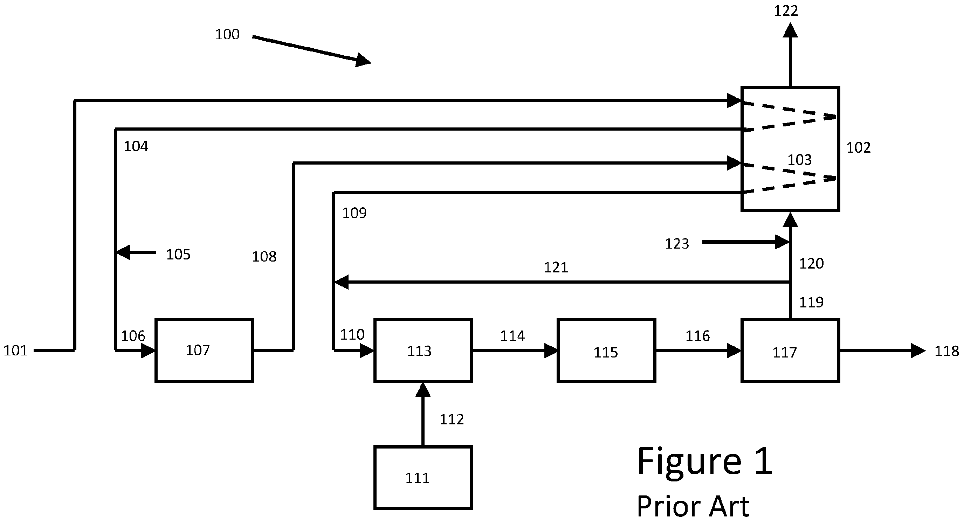

Turning to Figure 1, a basic state-of-the-art hydrogen plant **100** utilizing autothermal reformer **113** is illustrated. ASU **111** produces oxygen containing stream **112**. Hydrocarbon feedstock stream **101** is introduced into fired heater **102** wherein it is preheated in heat exchange coils **103**, thus producing preheated feedstock stream **104**. Preheated feedstock stream **104** is combined with steam stream **105**, thus forming pre-reformer feed stream **106**. Pre-reformer feed stream **106** is then introduced into pre-reformer **107**, thereby producing pre-reformed stream **108**. Pre-reformed stream **108** is introduced into fired heater **102** wherein it is preheated in heat exchange coils **103**, thus producing preheated pre-reformed stream **109**.

Preheated pre-reformed stream **109** is combined with purge recycle stream **121**, thereby forming ATR feed stream **110**. ATR feed stream **110** is then introduced into ATR **113** along with oxygen containing stream **112**, thereby forming raw syngas stream **114**. Raw syngas stream **114** is then introduced into water-gas shift reactor **115**, thereby producing shifted syngas stream **116**. Shifted syngas stream **116** is then introduced into hydrogen separation device **117**. Hydrogen separation device **117** may be utilized for carbon capture, or simply to produce product hydrogen stream **118**. Hydrogen separation device **117** produces purge gas stream **119**. Purge gas fuel stream **120** is combined with hydrocarbon fuel stream **123** and introduced as fuel into fired heater **102**. Second portion **121** is combined with preheated pre-reformed stream **109** to produce ATR feed stream **110**.

State-of-the-art autothermal reforming technologies are associated with at least one fired heater **102** including one or more heat exchange coils **103** providing sufficient process heat. The temperature required for the different process steps of the production unit is provided by these heat exchanges. The heat duty required for this heat exchange is provided by firing of hydrocarbon fuel **123** that leads to CO₂ emissions in the flue gas stream **122** exiting the fired heater.

Preheating of hydrocarbon feedstock and/ or preheating of feed + steam mix and/ or boiling of water and/ or superheating of medium or high-pressure steam is typically done by the heat exchange coils in the fired heater (not shown). The more heat exchange that happens in fired heater **102,** the heat duty requirement by fuel increases, and so increases the CO₂ emissions.

To compensate for these CO₂ emissions and to ensure a higher target CO₂ capture rate, more hydrogen is produced than required as product by additional feedstock processing (reforming, shift, CO₂ removal) and firing that additional H₂ product in the fired heater and that is how direct CO₂ emissions are minimized.

However, this additional processing of feedstock has a direct adverse impact on both operating and capital cost and above all, on carbon intensity. Additional feedstock consumption, therefore higher oxygen, power and other utility consumption increases the operating cost. On the other hand, due to higher effective material flow, all equipment becomes oversized and thus the capital investment goes higher.

Therefore, there is a need to invent an efficient solution to reduce direct emissions from an autothermal reforming based low-carbon H₂ generation process to achieve ≥ 99% carbon capture rate without impacting indirect emissions i.e. Scope 2 and Scope 3 emissions.

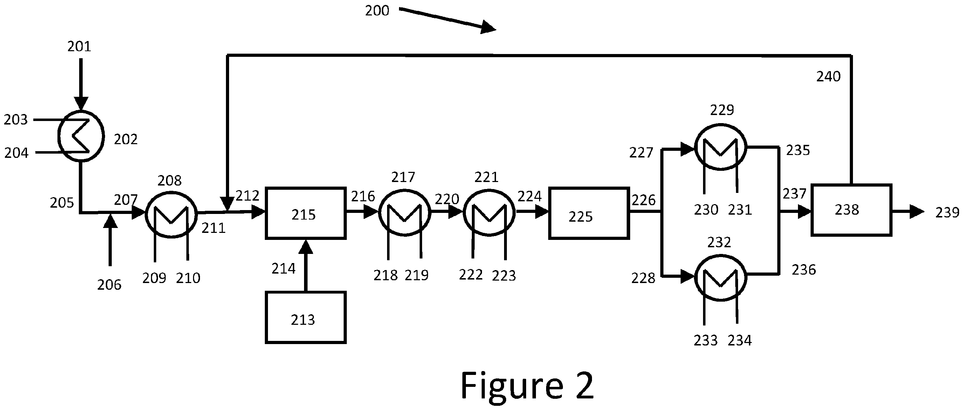

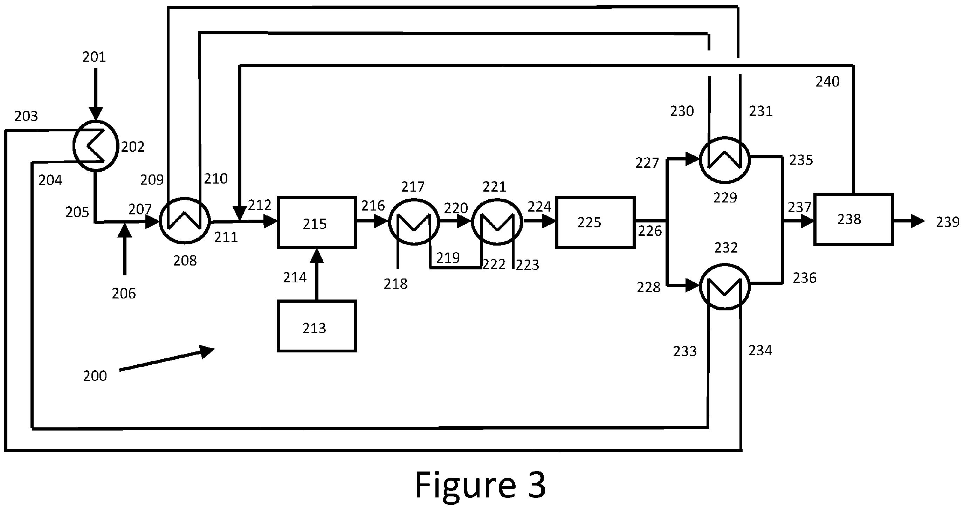

Turning to Figures 2 - 5, various embodiments of a hydrogen plant **200** in accordance with the present invention are illustrated. Figure 2 illustrates the generic arrangement of the present invention, and Figures 3-5 illustrate specific embodiments.

Turning first to Figure 2, ASU **213** produces oxygen containing stream **214.** Hydrocarbon feedstock stream **201** is heated in feedstock preheater **202,** thus producing heated feedstock stream **205.** The heat for this preheating, as indicated by heat transfer lines **203** and **204,** may come from various internal heat sources, as discussed in detail below.

Heated feedstock stream **205** is combined with steam stream **206**, thus forming ATR feed stream **207**. ATR feed stream **207** is heated in ATR feed preheater **208**, thus producing heated ATR feed stream **211**. The heat for this preheating, as indicated by heat transfer lines **209** and **210,** may come from various internal heat sources, as discussed in detail below.

Heated ATR feed stream **211** is combined with purge gas recycle stream **240,** thus forming combined ATR feed stream **212.** Combined ATR feed stream **212** is then introduced into ATR **215** along with oxygen containing stream **214,** thereby forming raw syngas stream **216.** Raw syngas stream **216** is introduced into waste heat boiler **217** along with boiler feed water stream **218,** thereby producing cooled raw syngas stream **220,** and saturated steam stream **219.** Cooled raw syngas stream **220** is then introduced into first heat exchanger **221,** thereby producing further cooled raw syngas stream **224.** The cooling for first heat exchanger **221,** as indicated by heat transfer lines **222** and **223,** may come from various internal sources, as discussed in detail below.

Further cooled raw syngas stream **224** is introduced into water-gas shift reactor **225,** thereby producing shifted syngas stream **226.** Shifted syngas stream **226** is divided into first stream **227** and second stream **228**. First shifted gas stream **227** is then introduced into second heat exchanger **229,** thereby producing first cooled shifted syngas stream **235.** The cooling for second heat exchanger **229,** as indicated by heat transfer lines **230** and **231,** may come from various internal sources, as discussed in detail below. Second shifted gas stream **228** is then introduced into third heat exchanger **232** thereby producing second cooled shifted syngas stream **236.** The cooling for third heat exchanger **232,** as indicated by heat transfer lines **233** and **234,** may come from various internal sources, as discussed in detail below.

First cooled shifted syngas stream **235** and second cooled shifted syngas stream **236** are combined, thus forming cooled shifted syngas stream **237.** Cooled shifted syngas stream **237** is then introduced into hydrogen separation device **238.** Hydrogen separation device **238** may be utilized for carbon capture, or simply to produce product hydrogen stream **239.** Hydrogen separation device **238** produces purge gas stream **240.**

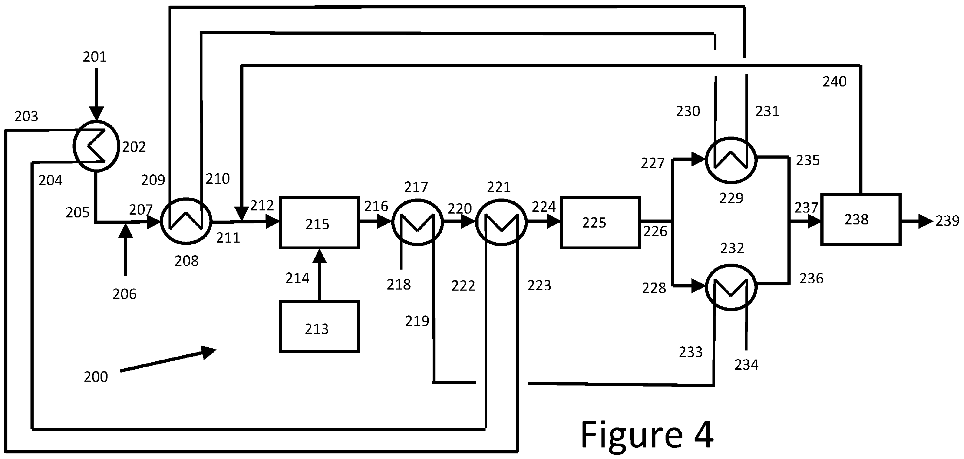

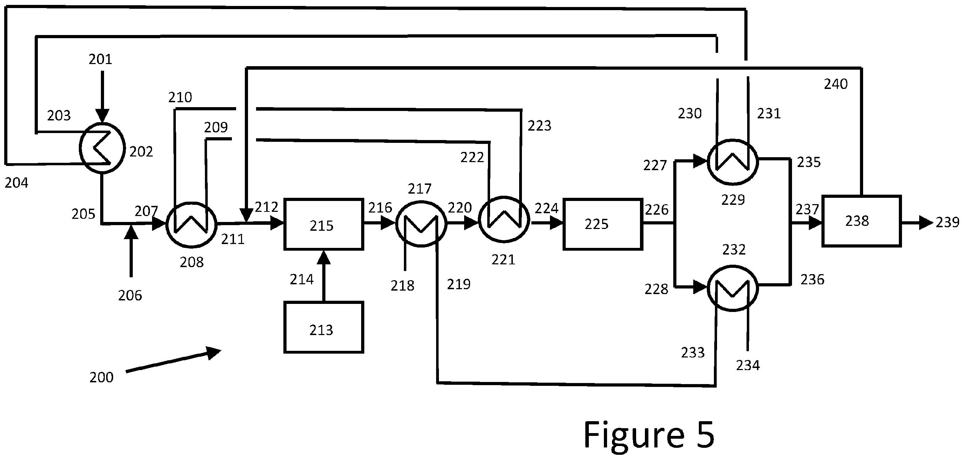

Turning to Figures 3-5, ASU **213** produces oxygen containing stream **214.** Hydrocarbon feedstock stream **201** is heated in feedstock preheater **202,** thus producing heated feedstock stream **205.** The heat for this preheating, as indicated by heat exchange lines **203** and **204,** may come from various internal heat sources.
- Feedstock preheater **202** may exchange heat with third heat exchanger **232,** thus obtaining heat from second shifted gas stream **228.** In this arrangement, heat exchange lines **203** and **204** are thermally connected to heat exchange lines **233** and **234** (as illustrated in Figure 3),
- Feedstock preheater **202** may exchange heat with first heat exchanger **221,** thus obtaining heat from cooled raw syngas stream **220.** In this arrangement, heat exchange lines **203** and **204** are thermally connected to heat exchange lines **222** and **223** (as illustrated in Figure 4),
- Feedstock preheater **202** may exchange heat with second heat exchanger **229,** thus obtaining heat from first shifted gas stream **227,** In this arrangement, heat exchange lines **203** and **204** are thermally connected to heat exchange lines **230** and **231** (as illustrated in Figure 5)

Heated feedstock stream **205** is combined with steam stream **206,** thus forming ATR feed stream **207.** ATR feed stream **207** is heated in ATR feed preheater **208,** thus producing heated ATR feed stream **211.** The heat for this preheating, as indicated by heat exchange lines **209** and **210,** may come from various internal heat sources.
- ATR feed preheater **208** may exchange heat with second heat exchanger **229,** thus obtaining heat from first shifted gas stream **227.** In this arrangement, heat exchange lines **209** and **210** are thermally connected to heat exchange lines **230** and **231** (as illustrated in Figures 3 and 4)
- ATR feed preheater **208** may exchange heat with first heat exchanger **221,** thus obtaining heat from cooled raw syngas stream **220.** In this arrangement, heat exchange lines **209** and **210** are thermally connected to heat exchange lines **222** and **223** (as illustrated in Figure 5).

Heated ATR feed stream **211** is combined with purge gas recycle stream **240,** thus forming combined ATR feed stream **212.** Combined ATR feed stream **212** is then introduced into ATR **215** along with oxygen containing stream **214,** thereby forming raw syngas stream **216.** Raw syngas stream **207** is introduced into waste heat boiler **217** along with boiler feed water stream **218,** thereby producing cooled raw syngas stream **220,** and saturated steam stream **219.**
- Saturated steam stream **219** may exchange heat with first heat exchanger **221,** thus obtaining heat from cooled raw syngas stream **220.** In this arrangement, saturated steam stream **219** is thermally connected to heat exchange line **222,** which results in heat exchange line **223** containing superheated steam. (as illustrated in Figure 3)
- Saturated steam stream **219** may exchange heat with third heat exchanger **232**, thus obtaining heat from second shifted syngas stream **228.** In this arrangement, saturated steam stream **219** is thermally connected to heat exchange line **233**, which results in heat exchange line **234** containing superheated steam (as illustrated in Figures 4 and 5).

Cooled raw syngas stream **220** is then introduced into first heat exchanger **221**, thereby producing further cooled raw syngas stream **224**.
- First heat exchanger **221** may provide heat to saturated steam stream **219** resulting in a superheated steam stream **223**. (as illustrated in Figure 3)
- First heat exchanger **221** may exchange heat with feedstock preheater **202**, thus providing heat to hydrocarbon feedstock stream **201**. In this arrangement, heat exchange lines **222** and **223** are thermally connected to heat exchange lines **203** and **204.** (as illustrated in Figure 4)
- First heat exchanger **221** may exchange heat with ATR feed preheater **208**, thus providing heat to ATR feed stream **207**. In this arrangement, heat exchange lines **222** and **223** are thermally connected to heat exchange lines **209** and **210.** (as illustrated in Figure 5)

Further cooled raw syngas stream **224** is introduced into water-gas shift reactor **225**, thereby producing shifted syngas stream **226**. Shifted syngas stream **226** is divided into first stream **227** and second stream **228**. First shifted gas stream **227** is then introduced into second heat exchanger **229**, thereby producing first cooled shifted syngas stream **235**.
- Second heat exchanger **229** may exchange heat with ATR feed preheater **208**, thus providing heat to ATR feed stream **207**. In this arrangement, heat exchange lines **230** and **231** are thermally connected to heat exchange lines **209** and **210.** (as illustrated in Figures 3 and 4)
- Second heat exchanger **229** may exchange heat with feedstock preheater **202**, thus providing heat to hydrocarbon feed stream **201**. In this arrangement, heat exchange lines **230** and **231** are thermally connected to heat exchange lines **203** and **204.** (as illustrated in Figure 5)

Second shifted gas stream **228** is then introduced into third heat exchanger **232** thereby producing second cooled shifted syngas stream **236.**
- Third heat exchanger **232** may exchange heat with feedstock preheater **202,** thus providing heat to hydrocarbon feed stream **201.** In this arrangement, heat exchange lines **233** and **234** are thermally connected to heat exchange lines **203** and **204** (as illustrated in Figure 3).
- Third heat exchanger **232** may provide heat to saturated steam stream **219** resulting in a superheated steam stream **234** (as illustrated in Figures 4 and 5)

First cooled shifted syngas stream **235** and second cooled shifted syngas stream **236** are combined, thus forming cooled shifted syngas stream **237.** Cooled shifted syngas stream **237** is then introduced into hydrogen separation device **238.** Hydrogen separation device **238** may be utilized for carbon capture, or simply to produce product hydrogen stream **239.** Hydrogen separation device **238** produces purge gas stream **240.**

The inventive solution allows to reach a very high CO₂ capture rate (up to ≥ 99% direct emissions) in decarbonized H₂ production units based on autothermal reforming.

Two problems have been identified to be solved:
Problem 1: Reduction/ elimination of heating demand from fired heater/ heat of combustion
Problem 2: Seeking an alternative solution for treating hydrocarbons containing off gases resulting from the CO₂ capture or hydrogen purification section.

The inventive solution consists of:

### Addressing Problem 1)

- employing an efficient synthesis gas generation process that may consist of at least an oxygen based catalytic autothermal reforming step, at least one water-gas shift reaction step with at least one catalytic reactor and employing a CO₂ capture unit.
- The efficient syngas generation process is characterized in such a way that there is no heating requirement of process and/ or by-product and/ or utility is required by any heat of combustion or electrical heat during normal operation. Feedstock and feed/steam mixture is preheated downstream of at least one of the shift reactors and/ or upstream of the shift reactor, by the effluent gas of the boiler downstream of ATR. Further, saturated steam generated in the process of heat recovery is also superheated downstream of at least one of the shift reactors and/ or upstream of the shift reactor, by the process gas effluent of the boiler downstream of ATR. The configuration preferably does not include a pre-reformer as the endothermic reaction in the pre-reformer as the pre-heating of gas/steam mixture to the temperature requirement at the inlet of the pre-reforming reactor can thus be avoided.

### Addressing Problem 2)

- Instead of combustion, the purge gas stream from CO₂ capture of the hydrogen purification unit is not anymore sent to the fired heater. A recycle of purge gas to the process is foreseen. Depending on the selected CO₂ capture unit some fraction of the purge gas might be injected in the hydrogen product still meeting the product specification.
- There are in principle 2 options for the capture capture unit.
   ∘ Option 1: CO₂ capture unit where almost all (>98%) of the CO₂ available in syngas. The mentioned CO₂ capture unit may include at least a process of physical absorption or chemical absorption of CO₂
   ∘ Option 2: Alternatively, the mentioned CO₂ capture unit can be located downstream of a syngas purification step such as a Pressure Swing Adsorption process for producing higher purity (>98%) hydrogen gas enabling minimized slippage of carbon atoms along with product hydrogen.
- In this alternative method, employing a process of cryogenic removal of carbon dioxide from the off gas coming from the abovementioned purification section enabling production of very high purity dry carbon dioxide (> 99.9 mole%) which can be made available at liquid and/ or gaseous and/ or supercritical state at the outlet of carbon dioxide removal process itself and is ready for sequestration without any further processing.
- Employing a membrane separation process at the exit of the cryogenic carbon dioxide removal process, enabling separation of at least a part of hydrogen gas molecules from the gas lean on carbon dioxide and routing the hydrogen gas molecules back to the first purification step thus improving the effective recovery of the purification step and minimizing the requirement of hydrocarbon feedstock to be processed.
- Routing at least part of the high pressure residue gas or full portion of the residue gas coming from the abovementioned membrane separation process to the syngas generation section (upstream/ downstream of reforming step) in order to minimize or eliminate the loss of unconverted carbon atoms principally in the form of hydrocarbon and carbon monoxide eventually improving the process efficiency and carbon footprint. In case part of the residue gas is routed to the syngas generation section, rest of the gas is mixed with the H₂ product stream downstream of the syngas purification step.
- Thus no residue gas is required to be disposed of in a fired heater and thus a fired heater can be removed from the hydrogen generation unit and the unit can experience no emission during continuous normal operation. The purge required for the process is disposed via H₂ product only.
- For starting of the plant, at least one start-up fired heater or at least one start-up electric heater shall be required to ensure auto-ignition temperature is achieved inside the autothermal reforming reactor.
- It is also observed that a set-up without Fired Heater will maintain a superior energy efficiency and CO2 balance compared to a Fired Heater set-up even if the purge gas stream needs to be flared. This observation is only valid for feed gas with < 3% inert content (preferably < 1) and an oxygen purity of > 99.5% (preferably min 99.8%). Consequently, if pure hydrogen needs to be produced, purging a small stream to an incinerator may still be a better option than installing a dedicated Fired Heater.

With these inventive steps, it is possible to furnish a configuration of a hydrogen production unit that can be built without a fired heater and thus can experience no direct CO₂ emission by firing.

By directly sending the H₂-rich gas downstream a physical/ chemical CO₂ absorption step as product or alternatively recycling the residue gas from cryogenic CO₂ capture unit fully to reforming or partly to reforming and partly to the H₂ product, and thereby eliminating the fired heater during continuous operation, the following can be achieved:
- Direct carbon capture rate of 99% or even more; as there is no fired heater hence no fired emission
- Recycling maximum or full portion of unconverted gas to the syngas generation/ reforming section to minimize the loss of carbon atoms as well as minimizing the hydrocarbon feedstock intake to the production unit.
- Disposing some of the unconverted carbon compound molecules as well as inert molecules namely but not limited to N₂, Ar to the product stream thus ensuring no accumulation and economic size of the equipment in the production unit.

This solution distinguishes itself from others for the following reasons:
- Achieving very high CO₂ capture rate (≥99%) without having any need of H₂ firing.
- No H₂ firing need means no additional feedstock processing and thereby no additional utility consumption, hence a minimized operating cost.
- No H₂ firing need also means the plant shall produce according to the product requirement and hence no oversizing leading minimized capital investment.
- No fired heater in the layout makes the H₂ production unit intensely compact, smaller plot size with simpler operational control and minimum safety requirements.

It will be understood that many additional changes in the details, materials, steps and arrangement of parts, which have been herein described in order to explain the nature of the invention, may be made by those skilled in the art within the principle and scope of the invention as expressed in the appended claims. Thus, the present invention is not intended to be limited to the specific embodiments in the examples given above.

## Claims

1. A process for producing hydrogen, comprising:
• producing a raw syngas stream within an autothermal reformer from an ATR feed stream comprising a hydrocarbon feed stream and a steam stream, wherein the raw syngas stream comprises hydrogen, carbon monoxide, carbon dioxide, and water,
• cooling the raw syngas stream by vaporizing boiler feed water thereby producing a steam stream and a second syngas stream,
• superheating a steam stream by utilizing the sensible heat of the second syngas stream thereby producing a third syngas stream,
• the third syngas stream is mixed with water and/or steam added prior to introduction to a catalytic water-gas shift reactor thereby producing a minimum required ratio of steam to dry gas for the shift catalyst (> 0.2 mol/mol),
• producing a first shifted syngas stream by shift reaction inside the catalytic water-gas shift reactor,
• producing a second shifted syngas stream by cooling the first shifted syngas stream by heat exchange with a hydrocarbon feed stream or a mixed stream of hydrocarbon and steam or by raising steam or all of these,
• further cooling the second shifted syngas stream in subsequent step(s) prior to introduction to pre-combustion carbon dioxide capture unit producing at least one carbon dioxide -rich stream and one carbon dioxide-depleted stream,
wherein a fired heater might be functional during plant start-up but will not be in service during continuous plant operation.

2. The process of claim 1, wherein the pre-combustion carbon dioxide capture unit is preceded or succeeded by hydrogen purification unit producing at least one hydrogen-rich stream (>90 mole% hydrogen purity).

3. The process of claim 1, wherein the produced hydrogen may be used for ammonia synthesis.

4. The process of claim 1, wherein the ATR feed stream passes through a pre-reforming stage.

5. The process of claim 1, wherein fired heater might be functional during normal plant operation however the sum of the heat exchange duties taking place in the fired heater does not exceed 3 MWh/ ton hydrogen (on 100% hydrogen purity basis) produced and the direct carbon dioxide emission from the hydrogen production process does not exceed 2.5 kg carbon dioxide / kg hydrogen (on 100% hydrogen purity basis) produced

6. The process of claim 1, wherein the fired heater required during start-up or normal operation is replaced and/or supplemented by an electric heater.

7. A process for producing hydrogen, comprising:
• producing a raw syngas stream within an autothermal reformer from an ATR feed stream comprising a hydrocarbon feed stream and a steam stream, wherein the raw syngas stream comprises hydrogen, carbon monoxide, carbon dioxide, and water,
• cooling the raw syngas stream by vaporizing boiler feed water thereby producing a steam stream and a second syngas stream,
• heating a hydrocarbon feed stream by utilizing the sensible heat of the second syngas stream thereby producing a third syngas stream,
• the third syngas stream is mixed with water and/or steam added prior to introduction to a catalytic water-gas shift reactor thereby producing a minimum required ratio of steam to dry gas for the shift catalyst (> 0.2 mol/mol),
• producing a first shifted syngas stream by shift reaction inside the catalytic water-gas shift reactor,
• producing a second shifted syngas stream by cooling the first shifted syngas stream by heat exchange with a steam stream superheater or a mixed stream of hydrocarbon and steam or by raising steam or all of these,
• further cooling the second shifted syngas stream in subsequent step(s) prior to introduction to pre-combustion carbon dioxide capture unit producing at least one carbon dioxide -rich stream and one carbon dioxide-depleted stream,
wherein a fired heater might be functional during plant start-up but will not be in service during continuous plant operation.

8. The process of claim 7, wherein the pre-combustion carbon dioxide capture unit is preceded or succeeded by hydrogen purification unit producing at least one hydrogen-rich stream (>90 mole% hydrogen purity).

9. The process of claim 7, wherein the produced hydrogen may be used for ammonia synthesis.

10. The process of claim 7, wherein the ATR feed stream passes through a pre-reforming stage.

11. The process of claim 7, wherein fired heater might be functional during normal plant operation however the sum of the heat exchange duties taking place in the fired heater does not exceed 3 MWh/ ton hydrogen (on 100% hydrogen purity basis) produced and the direct carbon dioxide emission from the hydrogen production process does not exceed 2.5 kg carbon dioxide / kg hydrogen (on 100% hydrogen purity basis) produced

12. The process of claim 7, wherein the fired heater required during start-up or normal operation is replaced and/or supplemented by an electric heater.

13. A process for producing hydrogen, comprising:
• producing a raw syngas stream within an autothermal reformer from an ATR feed stream comprising a hydrocarbon feed stream and a steam stream, wherein the raw syngas stream comprises hydrogen, carbon monoxide, carbon dioxide, and water,
• cooling the raw syngas stream by vaporizing boiler feed water thereby producing a steam stream and a second syngas stream,
• heating a mixed stream of hydrocarbon and steam by utlizing the sensible heat of the second syngas stream thereby producing a third syngas stream,
• the third syngas stream is mixed with water and/or steam added prior to introduction to a catalytic water-gas shift reactor thereby producing a minimum required ratio of steam to dry gas for the shift catalyst (> 0.2 mol/mol),
• producing a first shifted syngas stream by shift reaction inside the catalytic water-gas shift reactor,
• producing a second shifted syngas stream by cooling the first shifted syngas stream by heat exchange with a steam stream superheater or a hydrocarbon feed stream or by raising steam or all of these,
• further cooling the second shifted syngas stream in subsequent step(s) prior to introduction to pre-combustion carbon dioxide capture unit producing at least one carbon dioxide -rich stream and one carbon dioxide-depleted stream,
wherein a fired heater might be functional during plant start-up but will not be in service during continuous plant operation.

14. The process of claim 13, wherein the pre-combustion carbon dioxide capture unit is preceded or succeeded by hydrogen purification unit producing at least one hydrogen-rich stream (>90 mole% hydrogen purity).

15. The process of claim 13, wherein the produced hydrogen may be used for ammonia synthesis.

16. The process of claim 13, wherein the ATR feed stream passes through a pre-reforming stage.

17. The process of claim 13, wherein fired heater might be functional during normal plant operation however the sum of the heat exchange duties taking place in the fired heater does not exceed 3 MWh/ ton hydrogen (on 100% hydrogen purity basis) produced and the direct carbon dioxide emission from the hydrogen production process does not exceed 2.5 kg carbon dioxide / kg hydrogen (on 100% hydrogen purity basis) produced.

18. The process of claim 13, wherein the fired heater required during start-up or normal operation is replaced and/or supplemented by an electric heater.
